# EUROPEAN PATENT SPECIFICATION

(11) **EP 3 512 764 B1**
(45) Date of publication and mention of the grant of the patent: **05.08.2020**
(21) Application number: 17767991.7
(22) Date of filing: 14.09.2017
(51) Int. Cl.: B62J 11/00, F16B 2/08

(54) **ATTACHING DEVICE FOR ATTACHING A VEHICLE ACCESSORY TO A VEHICLE**
BEFESTIGUNGSVORRICHTUNG ZUR BEFESTIGUNG EINES FAHRZEUGZUBEHÖRS AN EINEM FAHRZEUG
DISPOSITIF DE FIXATION PERMETTANT DE FIXER UN ACCESSOIRE DE VÉHICULE SUR UN VÉHICULE

(30) Priority: 16.09.2016 EP 16189201
(43) Date of publication of application: 24.07.2019
(73) Proprietor: Reelight APS, 8260 Viby J (DK)
(72) Inventor: THYGESEN, Rune Ryberg, 7100 Vejle (DK); JAKOBSEN, Jes, 8000 Aarhus C (DK)
(74) Representative: Plougmann Vingtoft a/s
(86) International application number: PCT/DK2017/050296
(87) International publication number: WO 2018/050197

(56) References cited:
- DE-U1- 29 900 863
- DE-U1-202004 004 049
- DE-U1-202010 007 290

## Description

### FIELD OF THE INVENTION

The present invention relates to an attaching device for attaching a vehicle accessory to a vehicle. Especially, the invention provides an attaching device for attaching a bicycle accessory to a bicycle.

### BACKGROUND OF THE INVENTION

In the bicycle industry, there is a large market for accessories making the bicycle more useful, attractive or effective. These bicycle accessories are often aftermarket products sold to consumers separately, e.g. after a bicycle has been purchased. In order to attach these accessories to the bicycle, a number of universal brackets for mounting exist, which allow the consumer the possibility of attaching their accessories without the need for professional help.

However, a number of issues arise with these typical universal mounting mechanisms: They are either not sufficiently universal, consist of numerous parts from which the consumer has to choose, do not secure the accessory sufficiently or require the consumer to have a wide range of tools at their disposal. Consequently, the mounting mechanisms are often not very user-friendly, and often the user cannot mount their accessories without having to ask for an extra pair of hands or tools.

This is typical for all universal mounting systems, but for more demanding applications yet further requirements for the mounting system are present. This is for example the case with magnetic bicycle lights (also called battery-free bicycle lights), where a magnet is mounted on the spoke of the bicycle, and a bicycle light (dynamo) is mounted on the bicycle fork or seat stay. The alignment between the magnet and the light is critical, and the light therefore needs to be positioned with a fair deal of precision. It is, moreover, crucial that the bicycle light (dynamo) does not move once attached/mounted, as this may cause the light to work poorly or, worse, may cause the light to enter the bicycle wheel and cause a potential accident.

A further challenge with these universal mounting systems is that the geometry of the vehicle can be difficult to accommodate, resulting in a mismatch between the mounting system and the geometry of the vehicle part, where an accessory is to be attached. This is an increasing challenge, as e.g. bicycle frames are becoming increasingly complex, both as a means to differentiate, and because the continuous advancement of technology and materials allows it.

Yet another challenge is that, during use, the mounting mechanisms often loosen their grip on the bicycle resulting in the accessory falling into a suboptimum position. Further, the mounting mechanisms are often subject to theft, as they can be easily detached from the bicycle. On the other hand, very rigid connections between the mounting mechanism and the bicycle may also be a disadvantage, as it may be impossible to remove the mounting mechanism from the bicycle without causing damage to the mechanism or to the bicycle.

It is evident that many of these problems arise with many other vehicles besides bicycles. For instance, a number of accessories exist for e.g. cars, strollers, scooters, baby carriages, motorcycles, such as extra mirrors, smartphone holders, baskets etc. Therefore, a mounting/attaching device for all vehicles is preferred.

Document DE20 2010 007 290 U1 is considered being the closest prior art and shows an attaching device for attaching accessory to a vehicle and comprising a base, a housing, a self locking gear arrangement, a driving part, a driven part and a flexible thread being configured for attachment to the shaft, the flexible thread further being configured for exiting the housing through an opening, for being wound around a part of the vehicle, and for being fastened to the attaching device and/or to the vehicle, wherein said flexible thread is arranged to be coiled around the shaft upon rotation of the driving part, so as to tighten said flexible thread around the part of the vehicle, thereby securing the attaching device to the vehicle.

### SUMMARY OF THE INVENTION

It is an object of the present invention to provide an improved attaching device and a method for attaching a vehicle accessory to a vehicle, e.g. a bicycle. In particular, a more efficient and/or reliable attaching device would be advantageous. Especially, it would be advantageous to provide an attaching device, which solves some of the problems with the existing mounting mechanisms, such as an attaching device, which can be easily mounted by a single, unskilled user, which does not require a wide range of tools, which provides a rigid connection to the vehicle, which can be detached only by using a tool without being damaged, and which fits to a wide variety of vehicles and accessories.

Thus, the above described object and several other objects are intended to be obtained in a first aspect of the invention.

In a first aspect, the invention provides an attaching device for attaching a vehicle accessory, such as a bicycle light, to a vehicle, such as a bicycle, the attaching device comprising:
- a base configured for contacting with a part of the vehicle, e.g. a part of a bicycle, such as a front fork, a seat stay, handlebars and/or a seat post.
- a housing being configured for housing the vehicle accessory and/or for attachment to the vehicle accessory, wherein the housing is connected to the base at least in an assembled state of the attaching device,
- a self-locking gear arrangement, such as a worm drive, arranged inside the housing, the self-locking gear arrangement comprising a driving part, such as a worm screw, and a driven part, such as a worm wheel, the driving part being configured for being accessed from outside the housing by a user and for being rotated by said user, e.g. by use of a tool, the driving part further being configured for, upon rotation, meshing with the driven part, causing the driven part to rotate in an intended angular direction, such as clockwise, wherein the driven part is locked from rotating by its own force in an angular direction, such as counter-clockwise, opposite to the intended angular direction,
- a shaft being fixed to the driven part, so as to allow said shaft to rotate with the driven part upon rotation of the driving part,
- a flexible thread, e.g. a flexible thread comprising a first and a second end, being configured for attachment to the shaft, e.g. by a first end, the flexible thread, e.g. a second end of the flexible thread, further being configured for exiting the housing through an opening, for being wound around a part of the vehicle, and for being fastened, e.g. by a second end, to the attaching device and/or to the vehicle, wherein said flexible thread is arranged to be coiled around the shaft upon rotation of the driving part, so as to tighten said flexible thread around the part of the vehicle, thereby securing the attaching device to the vehicle.

The attaching device is suitable for attaching a vehicle accessory to a vehicle, which is to be understood as the attaching device being designed to be attached to a specific part of a specific vehicle, e.g. a fork of a bicycle. In this context, vehicle accessory is understood as an object added to the vehicle to make it more useful, attractive and/or effective. The accessory may be related to the function of the vehicle, in the way that a light, a speedometer, a navigation system, a mirror, a telephone/smartphone and/or a basket and/or another instrument relates to the function of the vehicle. It may, alternatively, be purely decorative.

The attaching device may be suitable for attaching a vehicle accessory to any vehicle, such as a car, and/or a bicycle, and/or a scooter, and/or a boat. More specifically, the attaching device may be usable for attaching a vehicle accessory to any part of e.g. a bicycle such as a handlebar, and/or a bar of the bicycle frame, and/or a bar of the bicycle seat and/or to attach a vehicle accessory to any part of e.g. a car, such as a dashboard, and/a mirror, and/or an air vent and/or a seat.

It may be seen as a particular advantage of this aspect of the invention that the vehicle accessory can be easily mounted by a single user, due to the function of the flexible thread. The user is able to hold the attaching device in one hand, and in the other hand an end of the flexible thread exiting through an opening in the housing. The user may then place the attaching device in the desired position on the vehicle, wind the flexible thread around the vehicle, and attach the flexible thread to the attaching device and/or to the vehicle. Once this has been accomplished, the attaching device will hang loosely on the vehicle, and the user will have both hands free to adjust the position of the attaching device on the vehicle. Once the attaching device is correctly positioned, the user can hold the attaching device in place with one hand while rotating the driving part of the self-locking gear with the other hand, hereby tightening the flexible thread and securing the attaching device firmly to the vehicle. In this way, it is possible for one person to attach e.g. a magnetic generator bicycle light in a precise position relative to a magnet already in position on a spoke of the bicycle light. Still the self-locking gear will allow such bicycle light to be tightened so firmly to the frame, e.g. front fork or seat stay of the bicycle, that it will not leave the intended position and orientation by small knocks etc.

It may be seen as a further advantage of the present invention according to this aspect that the attaching device does not require a wide range of tools for attaching a vehicle accessory to a vehicle. It is a simple design, where the self-locking gear arrangement needs to be rotated, e.g. by using a tool and/or by turning a knob.

A further advantage of the invention according to this aspect is that a rigid connection is provided between the attaching device and the vehicle. This is due to the self-locking gear arrangement, wherein the driven part is locked from rotating by its own force, i.e. reversing the rotation caused by the driving part. Therefore, once the driving part is no longer subjected to rotation by the user, the gear arrangement will be locked, and the attaching device will be firmly secured to the vehicle. This is a further advantage in relation to theft, as it will not be possible to loosen the attaching device simply by pulling on it due to the self-locking gear.

A further advantage of the invention according to this aspect is that the attaching device can be easily detached from the vehicle due to the self-locking gear arrangement. The user may turn the driving part in a reverse direction causing the driven part to rotate reversely, and hereby the flexible thread will be loosened. This may be seen as an advantage, as the attaching device can be used for more than a single application, as there is no need to cause damage to it in order to release it from the vehicle.

By 'flexible thread' is understood a thread made from a material, which deforms and/or elongates only slightly when subjected to opposite forces pulling at the ends of the thread so that it is under tension, and/or a material which has a high tensile strength and/or a material which has a high yield strength. This provides the advantage that the flexible thread may provide a rigid connection to the vehicle and, once under tension, may not move substantially on the vehicle. In a preferred embodiment, the flexible thread may be made from a material, which is flexible in bending. This provides the advantage that the thread may be wrapped around a wide range of different geometries, and thus the attaching device may be used to attach accessories to many different vehicle types and/or vehicle parts. Further, the shaft may be designed with compact dimensions, if the flexible thread is capable of bending around a shaft with a small radii.

In a preferred embodiment according to the present invention, the flexible thread may be a metal wire rope. This is an advantageous embodiment, as a metal wire rope has a high tensile strength, and yet, is flexible in bending. Therefore, the flexible thread may be wrapped easily around a part of the vehicle, because of flexibility in bending, but due to the high tensile strength, it is able to withstand tension, and will not be elongated substantially, when pulled at both ends.
In a further preferred embodiment according to the present invention, the flexible thread may be a wire and/or a string and/or a rope made from e.g. metal and/or coated metal and/or nylon and/or rubber. By wire may be understood a single flexible strand or rod and/or a bundle of strands wrapped together and/or braided together.

In a further preferred embodiment of the present invention, the flexible thread may be coated with a polymer material and/or fabric on a surface arranged to contact with the vehicle. Alternatively, the flexible thread may itself be made from a material having a soft surface. This provides the advantage that the flexible thread being wound around a part of the vehicle does not present scratches, cuts, lines, marks or damages to the surface of the vehicle when rubbing against it. Furthermore, a coating, such as a PVC coating, on the flexible thread increases the friction between the thread and the part of the vehicle with which the thread contacts, and thus prevents the thread from sliding on the vehicle and losing its original position.

In another embodiment of the present invention, the flexible thread may be a nylon string.

In a further embodiment of the present invention, the flexible thread may be a rope and/or a strap and/or a tape.

In an embodiment, the flexible thread may be a round and/or a substantially round thread. The round thread may have a diameter of 0.1-10 mm, such as a diameter of 0.2-5 mm, such as 0.3-3 mm, such as a diameter of 0.5 mm, 0.7 mm, 0.8 mm, 0.9 mm, 1 mm, 1.1 mm, 1.2 mm, 1.5 mm or 2 mm.

In another embodiment, the flexible thread may be a flat and/or substantially flat strap. The strap may have a width of 2-20 mm, such as a width of 5 mm, 10 mm, 15 mm or 20 mm.

In an embodiment, the flexible thread may be a metal wire rope, such as a steel wire rope with a diameter of 1 mm, coated with a PVC coating, such as a PVC coating of 0.5 mm, so that the total diameter of the flexible thread is 1.5 mm.

By 'a flexible thread being configured for attachment to the shaft' may be understood a flexible thread being attached to the shaft by means of soldering, and/or by means of a hole in the shaft, the flexible thread being configured to enter through said hole from one side and be tied into a knot on the other side of said hole, and/or by means of a pin in the shaft, the flexible thread being configured to be tied around said pin, and/or by means of a mechanical locking mechanism on the shaft, the flexible thread being configured for being locked by one end to the shaft.

In the following, further preferred features and embodiments will be described.

In an embodiment of the present invention, a vehicle accessory to be attached to a vehicle may be arranged within the housing and at least partially enclosed by the housing. This provides the advantage that the vehicle accessory and the attaching device may be presented as an integrated unit, providing a simple, compact and user-friendly design. Furthermore, it provides the advantage that the vehicle accessory may be secured to the vehicle during use and between uses, so that the user does not need to attach the accessory every time it is to be used.

In a preferred embodiment of the present invention, the housing may form an enclosure around the self-locking gear arrangement. Especially, the driving part may be accessible for a tool or the like from an opening arranged on a lower side of the housing.

In a further embodiment of the invention, the self-locking gear arrangement may be a worm drive, wherein the driving part is a worm screw and the driven part is a worm wheel, the worm screw being configured for, upon rotation, meshing with the worm wheel, causing the worm wheel to rotate. This embodiment is advantageous as worm drives are an effective way of accomplishing a self-locking gear, due to them being compact. Furthermore, a worm drive may be seen as an advantageous design option in the present invention, as the worm screw can be easily turned by a user e.g. by including a knob in the end of the worm screw or by including an interface suitable for interacting with a tool.

In an embodiment of the present invention, the driving part and/or the driven part of the self-locking gear arrangement may have grooves machined around a circumference of an outer surface arranged to mesh with respectively the driving part or the driven part. This provides the advantage that throated and/or grooved gears are able to support a higher loading than non-throated gears, thereby providing a more reliable attaching device.

In another embodiment, neither the driving part nor the driven part have grooves on an outer surface.

In a further embodiment of the invention, the housing may be connected to the base by a ball joint, said ball joint comprising a spherical protrusion on one of the base and the housing configured for fitting into a socket of the other one of the base and the housing, so as to allow the housing to be moved freely in at least one plane including rotation in said plane, until the flexible thread is sufficiently tightened, and the housing is locked in position against the base. This embodiment is advantageous as the ball joint allows the user the freedom to adjust the position of the vehicle accessory with a high degree of precision. In this way, the user can make small adjustments, up-down and sideways, and once the vehicle accessory has reached an optimum position, the driving part may be tightened by a final rotational movement which adds further tension to the ball joint and thus locks it in position by friction.

In a further embodiment of the present invention, the base may comprise an opening for the flexible thread, the flexible thread being configured for passing through said opening, so as to allow the flexible thread to be attached to the shaft by at least one end, the other end of the flexible thread being configured for exiting the housing, passing through said opening in the base, being wound around a part of the vehicle, and being fastened to the attaching device and/or to the vehicle. This may be advantageous, as the opening in the base makes it possible to place the housing and the base adjoining, especially if these are connected by a ball joint. The attaching device will, thus, comprise fewer loose parts. Further, the flexible thread will be protected from wear and tear being enclosed by the housing and the base.

In another embodiment of the present invention, the flexible thread may be arranged as a loop, the loop being configured for exiting the housing through an opening, being wound around a part of the vehicle, and being fastened to the attaching device, such as to the base and/or to the housing and/or to the shaft. This embodiment is advantageous, as the loop enables the flexible thread to be securely fastened and prevents it from falling loose during use. In a special embodiment, the flexible thread exits the housing as a single wire, but where a loop is formed on an end of the wire, so as to allow it to be fixed to a part of the attaching device, e.g. base or housing.

In another embodiment, the attaching device according to the present invention may comprise a fastener, such as a hook and/or a snap-lock hook, for receiving and fixating a free end of the flexible thread, said flexible thread being attached by another end to the shaft and being wound around a part of the vehicle, so as to allow a user to let go of said free end so that the user can rotate the driving part of the self-locking gear arrangement and secure the attaching device to the vehicle. This is an advantageous embodiment, as the fastener, especially in combination with the loop, ensures that the flexible thread is securely fastened and does not loosen during use. Moreover, the fastener ensures that the flexible thread can be tightened sufficiently without being pulled off.

In one embodiment, the fastener may have a snap-function, such as the fastener being arranged for mechanically locking, once the flexible thread has been received. This provides the advantage that the user can attach the flexible thread using just one hand. Further, it prevents the flexible thread from falling off at an undesired time.

In a further embodiment of the attaching device according to the present invention, the driving part may comprise a first end configured for meshing with the driven part upon rotation, and a second end configured for engaging with a tool used to cause rotation of the driving part. This is an advantageous embodiment, as the user will be able to engage with the driving part using a tool, which means that the flexible thread can be effectively turned by the user without undue effort.

In one embodiment of the invention, the tool may be a dedicated key. This presents the advantage that the attaching device may be protected from theft.

In a further embodiment of the invention, the tool may be a standard tool, e.g. an Allen key and/or a screwdriver. This presents the advantage that the attaching device may be used with no requirement to store a separate key or similar, as standard, widely available tools may be used.

In a further embodiment of the invention, the tool may be a knob mounted on the driving part, which can be turned by the user.

In another embodiment of the attaching device for attaching a vehicle accessory to a vehicle according to the present invention, the vehicle accessory may comprise a light source, such as a magnet-generator driven light source, such as an electric battery powered light source, such as a front light and/or a rear light and/or a combined front and rear light. This is a preferred embodiment, as the invention is particularly useful in connection with light sources, such as bicycle lights and/or lights for baby carriages and/or lights for scooters and/or lights for other vehicles. This is due to the fact that the light source may be mounted with high precision and high stability using the attaching device. This is advantageous e.g. in connection with magnet-generator driven bicycle lights, as these need to be precisely aligned with the magnet.

In another embodiment of the present invention, the vehicle accessory may comprise an electronic vehicle instrument, such as a speedometer, a pulse meter, a navigation device, a telephone/smartphone, a power meter. These instruments may all with benefit be attached to a vehicle using the attaching device of the present invention, as the attaching device may ensure a rigid and precise mounting of the instruments.

It is to be understood that the vehicle accessory itself is not part of the claimed subject matter; however, the attaching device may be related to the vehicle accessory through use. The attaching device may, therefore, be defined by reference to the general shape and/or functionality of the vehicle accessory according to some embodiments of the present invention.

In another embodiment of the present invention, the attaching device may be suitable for attaching a vehicle accessory to a vehicle, wherein the vehicle may be a bicycle. The attaching device may e.g. be configured for attachment on a part of a frame of the bicycle, such as a fork and/or a seat stay, and/or a seat post, and/or handle bars. This may be an advantage as there exists many different accessories for bicycles and, especially for bicycle lights, there are high demands for precision mounting, high reliability and user-friendliness.

In a further embodiment of the attaching device according to the present invention, the housing may comprise means on its outer surface for mounting a vehicle accessory to be attached to a vehicle, such as the housing and the vehicle accessory comprising attachment means for mutual engagement, such as a snap-on arrangement, or a self-locking arrangement with a release mechanism arranged for user actuation. This may be an advantage, as the attaching device may then be a universal device usable for many different vehicle accessories. Further, it may be an advantage that e.g. a bicycle light can be easily snapped on and off the device, so that the user can bring the bicycle light with them, when leaving the bicycle.

In another embodiment of the present invention, the base and the housing may be formed as one single monolithic element, such as one single polymeric element. This may be an advantage due to the attaching device consisting of fewer parts, providing a simple and user-friendly design.

In a further embodiment of the attaching device according to the present invention, the base may have an exterior surface configured for contacting with the part of the vehicle, said exterior surface being formed so as to match an opposing exterior surface of the part of the vehicle, such as a bicycle frame. This may be advantageous, as this may provide a good connection of the attaching device to the vehicle. This may enable a more rigid attaching of the attaching device, and thereby, the vehicle accessory may be fixed in a desired position.

In a second aspect, the invention provides a bicycle accessory system comprising:
- an attaching device according to the first aspect, and
- a vehicle accessory, such as a bicycle light,
wherein the attaching device is configured for attaching the vehicle accessory to a part of a bicycle, such as a part of a frame and/or handle bars.

An advantage relating to this aspect of the present invention may be that the attaching device and the vehicle accessory, such as a bicycle light, may be provided as an integrated system, where the user is provided with a kit with all parts required for installing e.g. a bicycle light on a bicycle.

In a third aspect, the invention provides a bicycle comprising the bicycle accessory system of the previously described embodiment.

In a fourth aspect, the invention provides a method for attaching a vehicle accessory to a vehicle, such as a bicycle, the method comprising:
- providing an attaching device according the first aspect with a vehicle accessory being housed in the housing and/or attached to the housing,
- placing a base of the attaching device against a part of the vehicle to which the vehicle accessory is to be attached,
- winding the flexible thread around the part of the vehicle,
- fastening the flexible thread to the attaching device and/or to the vehicle,
- tightening the flexible thread around the part of the vehicle by rotating the driving part, such as by a tool engaging with the driving part through an opening in the housing, thereby securing the attaching device to the vehicle.

This aspect of the invention is particularly, but not exclusively, advantageous in that the method according to the present invention may be implemented by a consumer/user of the attaching device placing a base of the attaching device in a desired position on the vehicle, the attaching device comprising a vehicle accessory to be attached to said vehicle. The user may then fetch the flexible thread exiting from the attaching device and wind said flexible thread around the vehicle, e.g. around a part of the vehicle, such as around a bicycle fork or seat stay. The user may then fasten the flexible thread to the attaching device and/or to the vehicle, e.g. to a fastener, such as a snap-lock hook, on the attaching device. The user may then, by rotating the driving part of the self-locking gear, tighten the flexible thread and, hereby, secure the attaching device firmly to the vehicle. This presents the advantage that all method steps may be performed by a single user. Further, the method may be carried out without requiring numerous tools. Further, the method may be carried out with very little effort and/or strength on behalf of the user.

In an embodiment relating to this aspect of the invention, the method may further comprise attaching a bicycle light to a bicycle, such as a bicycle light being driven by a magnet generator, such as the bicycle light being arranged inside the housing.

In a further embodiment relating to this aspect of the invention, rotating the driving part may be accomplished by using a tool, such as a screwdriver and/or an Allen key and/or a dedicated tool/key, engaging with one end of the driving part.

The first, second, third and fourth aspects of the present invention may each be combined with any of the other aspects. These and other aspects of the invention will be apparent from and elucidated with reference to the embodiments described hereinafter.

### BRIEF DESCRIPTION OF THE FIGURES

The attaching device according to the invention will now be described in more detail with regard to the accompanying figures. The figures show one way of implementing the present invention and is not to be construed as being limiting to other possible embodiments falling within the scope of the attached claim set.

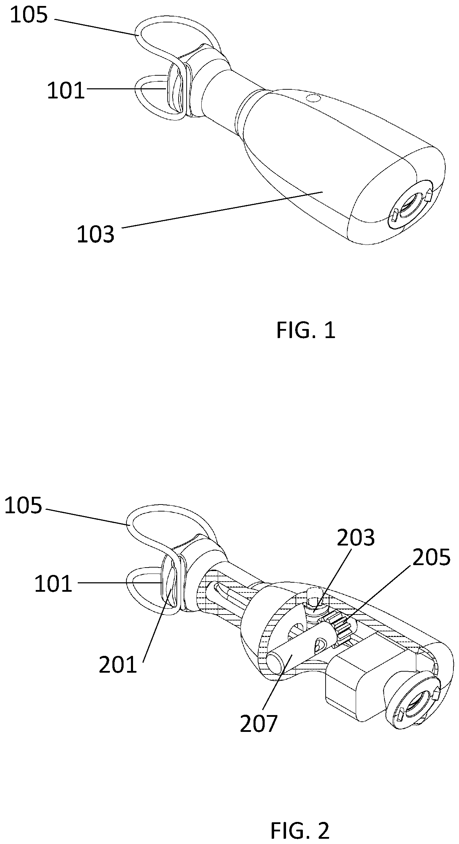

FIG.1 is an isometric drawing of a bicycle light embodiment according to the present invention,
FIG. 2 is a cutaway drawing of the same embodiment as in FIG. 1.

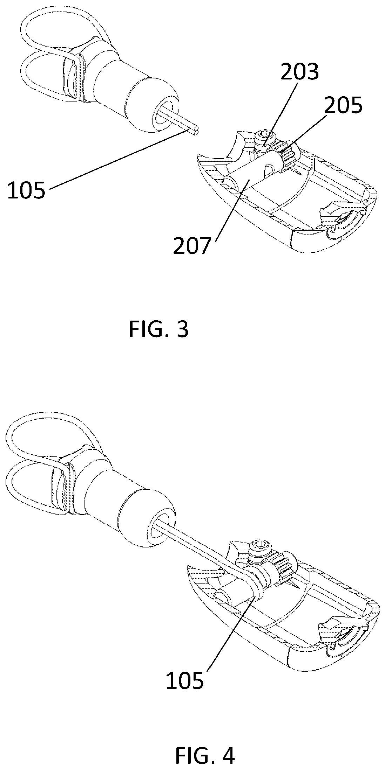

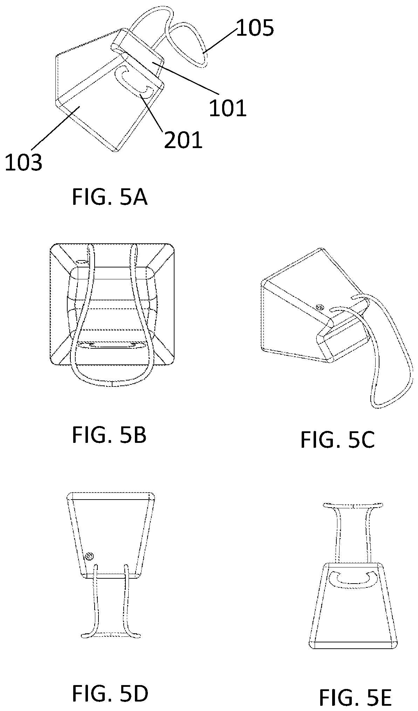

FIGs. 3 and 4 show further cut away and exploded views of the embodiment of FIGs. 1 and 2.
FIG.s 5A-5E are different views of another bicycle light embodiment according to the present invention.
FIG. 6 is an isometric drawing of an embodiment according to the present invention, in which the flexible thread 105 is fastened to the attaching device using a fastener 201 shown as a hook.
FIG. 7 is an isometric drawing of an embodiment according to the present invention, in which a standard tool 701 is used to tighten the flexible thread 105.
FIG. 8 is a isometric drawing of an embodiment according to the present invention, in which a dedicated tool/key 701 is used to tighten the flexible thread 105.
FIG. 9 is an isometric drawing of an embodiment according to the present invention, in which the flexible thread 105 is a strap fastened to the attaching device by a fastener 201.
FIG. 10 is an isometric drawing of an embodiment according to the present invention, in which the housing 103 comprises attachment means for mutual engagement 1001 for engaging with the vehicle accessory to be attached to the vehicle 601.
FIG. 11 is an isometric drawing of an embodiment according to the present invention.
FIG. 12 shows an embodiment of the attaching device implemented for attaching a bicycle light to a bicycle.

### DETAILED DESCRIPTION OF EMBODIMENTS

FIG.s 1 and 2 show an embodiment of the present invention, in which the vehicle accessory to be attached to a vehicle 601 is arranged within the housing 103 and at least partially enclosed by the housing 103. In the embodiment shown, the vehicle accessory comprises a light source, such as a magnet-generator driven light source, such as an electric battery powered light source, such as a front light and/or a rear light and/or a combined front and rear light. In the shown embodiment, the driving part 203 is turned by a knob. According to this embodiment of the invention, the base 101 has an exterior surface configured for contacting with the part of the vehicle 601, said exterior surface being formed so as to match an opposing exterior surface of the part of the vehicle 601, such as a bicycle frame. The embodiment further comprises a fastener 201 having a snap-function, such as the fastener 201 being arranged for mechanically locking, once the flexible thread 105 has been received.

FIG.s 3 and 4 show an exploded cutaway drawing of a bicycle light embodiment according to the present invention. In this embodiment, the housing 103 is connected to the base 101 by a ball joint. In the shown embodiment, the ball joint comprises a spherical protrusion on the base 101 configured for fitting into a socket of the housing 103, so as to allow the housing 103 to be moved freely in at least one plane including rotation in said plane, until the flexible thread 105 is sufficiently tightened, and the housing 103 is locked in position against the base 101. In the shown embodiment, the base 101 comprises an opening for the flexible thread 105, the flexible thread 105 being configured for passing through said opening, so as to allow the flexible thread 105 to be attached to the shaft 207 by at least one end, the other end of the flexible thread 105 being configured for exiting the housing 103, passing through said opening in the base 101, being wound around a part of the vehicle 601, and being fastened to the attaching device and/or to the vehicle 601.

FIG.s 5A-5E show an embodiment of the present invention, wherein the base 101 and the housing 103 are formed as one single monolithic element, such as one single polymeric element.

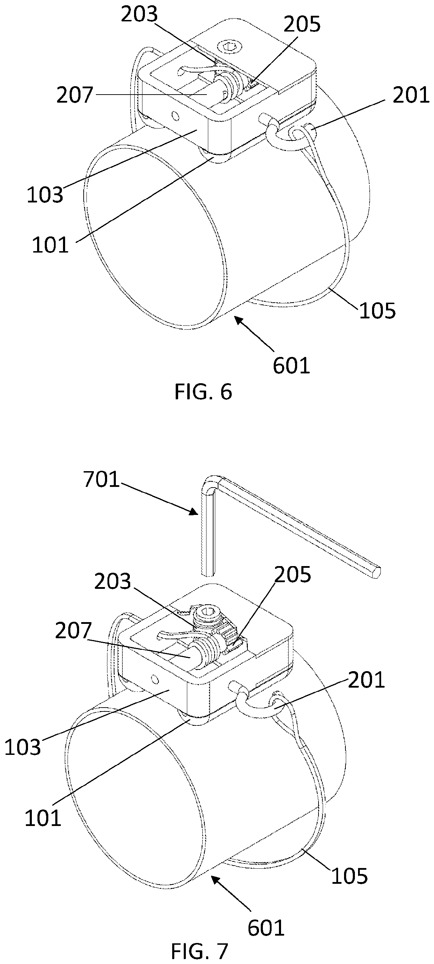

FIG. 6 shows an embodiment of the present invention, wherein the flexible thread 105 is arranged as a loop, the loop being configured for exiting the housing 103 through an opening, being wound around a part of the vehicle 601, and being fastened to the attaching device. In the shown embodiment, the flexible thread 105 is fastened to the housing 103. The invention according to this embodiment further comprises a fastener 201, shown as a hook, for receiving and fixating a free end of the flexible thread 105, said flexible thread 105 being attached by another end to the shaft 207 and being wound around a part of the vehicle 601, so as to allow a user to let go of said free end so that the user can rotate the driving part 203 of the self-locking gear arrangement and secure the attaching device to the vehicle 601. In the shown embodiment, the housing 103 forms an enclosure around the self-locking gear arrangement.

FIG. 7 shows an embodiment of the present invention, in which the self-locking gear arrangement is a worm drive, wherein the driving part 203 is a worm screw and the driven part 205 is a worm wheel, the worm screw being configured for, upon rotation, meshing with the worm wheel, causing the worm wheel to rotate. In the embodiment shown, the driving part 203 comprises a first end configured for meshing with the driven part 205 upon rotation, and a second end configured for engaging with a tool 701 used to cause rotation of the driving part 203. In the embodiment shown, the tool 701 is a standard tool, such as an Allen key.

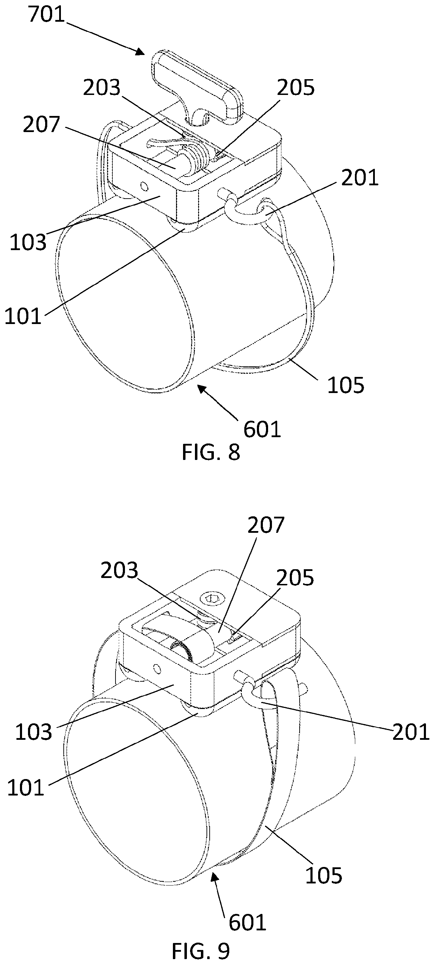

FIG. 8 shows an embodiment of the present invention similar to the embodiment shown in FIG. 7. In this embodiment, the tool 701 used to cause rotation of the driving part 203 is a dedicated key. In the embodiment shown, the flexible thread 105 may be a nylon string and/or a metal wire rope.

FIG. 9 shows an embodiment according to the present invention, in which the flexible thread 105 is a strap arranged as a loop.

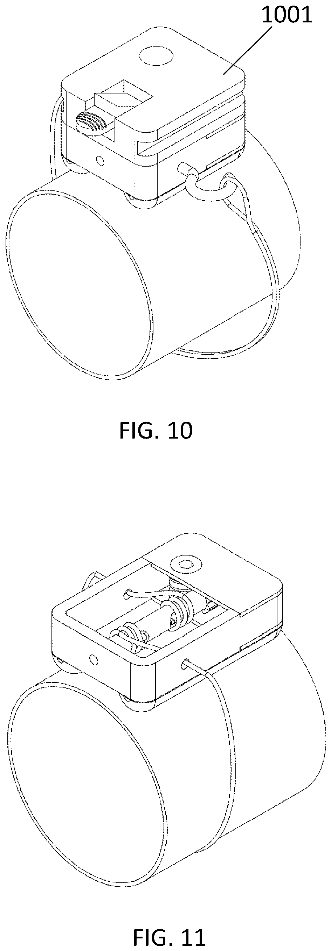

FIG. 10 shows an embodiment according to the present invention, wherein the housing 103 comprises means on its outer surface for mounting the vehicle accessory to be attached to the vehicle 601, such as the housing 103 and the vehicle accessory comprising attachment means for mutual engagement 1001, such as a snap-on arrangement, or a self-locking arrangement with a release mechanism arranged for user actuation.

FIG. 11 shows an embodiment of the present invention in which the flexible thread 105 comprises a first and a second end, and wherein both of the first and second ends are attached to and coiled up on the shaft 207.

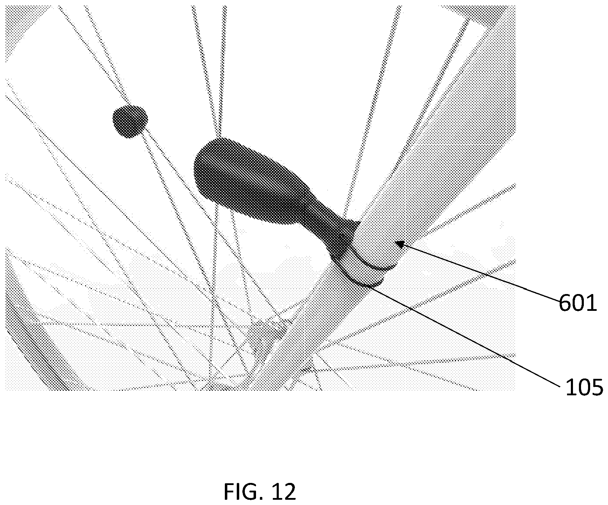

FIG. 12 shows an embodiment of the present invention being implemented, wherein the vehicle 601 is a bicycle, such as the attaching device being configured for attachment on a part of a frame of the bicycle, such as a fork and/or a seat stay.

According to a method embodiment, the invention provides a method for attaching a bicycle light device to a fork and/or a seat stay of a bicycle, the bicycle light device housing at least a light source, an electric power generator and/or a battery, and a self-locking gear arrangement, the method comprising
- placing a base 101 of the bicycle light device in a desired position on the fork and/or seat stay of the bicycle,
- winding a flexible thread 105, more specifically an end of the flexible thread 105 exiting from the bicycle light device, around the fork and/or the seat stay of the bicycle,
- fastening the end of the flexible thread 105 to the bicycle and/or to the bicycle light device, e.g. to a fastener 201, such as a snap-lock hook, on the bicycle light device,
- while holding the bicycle light device in the desired position and orientation with one hand, rotating, with the opposite hand, a driving part 203 of the self-locking gear arrangement, e.g. using a tool 701 such as a key and/or a standard tool and/or a knob on the driving part 203 of the self-locking gear arrangement, hereby tightening the flexible thread 105 and securing the bicycle light device firmly to the fork and/or to the seat stay.

To sum up, the invention provides an attaching device for attaching a vehicle accessory to a vehicle 601, such as attaching a bicycle light to a bicycle. The attaching device comprises a base 101 configured for contacting with a part of the vehicle 601, a housing 103 being configured for housing the vehicle accessory and/or for attachment to the vehicle accessory, a self-locking gear arrangement arranged inside the housing 103, a flexible thread 105, e.g. a wire, being configured for exiting the housing 103 through an opening, for being wound around a part of the vehicle 601, and for being fastened to the attaching device and/or to the vehicle 601. The flexible thread 105, e.g. a metal wire rope of 0.5-2 mm diameter, is arranged to be tightened upon rotation of a driving part 203 by a user, thereby securing the attaching device to the vehicle 601.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An attaching device for attaching a vehicle accessory to a vehicle, such as a bicycle, the attaching device comprising:
- a base (101) configured for contacting with a part of the vehicle (601),
- a housing (103) being configured for housing the vehicle accessory and/or for attachment to the vehicle accessory, wherein the housing (103) is connected to the base (101) at least in an assembled state of the attaching device,
- a self-locking gear arrangement arranged inside the housing (103), the self-locking gear arrangement comprising a driving part (203) and a driven part (205), the driving part (203) being configured for being accessed from outside the housing (103) by a user and for being rotated by said user, the driving part (203) further being configured for, upon rotation, meshing with the driven part (205), causing the driven part (205) to rotate in an intended angular direction, wherein the driven part (205) is locked from rotating by its own force in an angular direction opposite to the intended angular direction,
- a shaft (207) being fixed to the driven part (205), so as to allow said shaft (207) to rotate with the driven part (205) upon rotation of the driving part (203),
- a flexible thread (105) being configured for attachment to the shaft (207), the flexible thread (105) further being configured for exiting the housing (103) through an opening, for being wound around a part of the vehicle (601), and for being fastened to the attaching device and/or to the vehicle (601), wherein said flexible thread (105) is arranged to be coiled around the shaft (207) upon rotation of the driving part (203), so as to tighten said flexible thread (105) around the part of the vehicle (601), thereby securing the attaching device to the vehicle (601).

2. The attaching device according to claim 1, wherein a vehicle accessory to be attached to a vehicle (601) is arranged within the housing (103) and at least partially enclosed by the housing (103).

3. The attaching device according to claims 1 or 2, wherein the self-locking gear arrangement is a worm drive.

4. The attaching device according to any of the preceding claims, wherein the housing (103) is connected to the base (101) by a ball joint, said ball joint comprising a spherical protrusion on one of the base (101) and the housing (103) configured for fitting into a socket of the other one of the base (101) and the housing (103), so as to allow the housing (103) to be moved freely in at least one plane including rotation in said plane, until the flexible thread (105) is sufficiently tightened, and the housing (103) is locked in position against the base (101).

5. The attaching device according to any of the preceding claims, wherein the base (101) comprises an opening for the flexible thread (105), the flexible thread (105) being configured for passing through said opening, so as to allow the flexible thread (105) to be attached to the shaft (207) by at least one end, the other end of the flexible thread (105) being configured for exiting the housing (103), passing through said opening in the base (101), being wound around a part of the vehicle (601), and being fastened to the attaching device and/or to the vehicle (601).

6. The attaching device according to any of the preceding claims, wherein the flexible thread (105) is arranged as a loop, the loop being configured for exiting the housing (103) through an opening, being wound around a part of the vehicle (601), and being fastened to the attaching device, such as to the base (101) and/or to the housing (103) and/or to the shaft (207).

7. The attaching device according to any of the preceding claims, wherein the attaching device comprises a fastener (201), such as a hook and/or a snap-lock hook, for receiving and fixating a free end of the flexible thread (105), said flexible thread (105) being attached by another end to the shaft (207) and being wound around a part of the vehicle (601), so as to allow a user to let go of said free end so that the user can rotate the driving part (203) of the self-locking gear arrangement and secure the attaching device to the vehicle (601).

8. The attaching device according to any of the preceding claims, wherein the driving part (203) comprises a first end configured for meshing with the driven part (205) upon rotation, and a second end configured for engaging with a tool (701) used to cause rotation of the driving part (203).

9. The attaching device according to any of the preceding claims, wherein the vehicle accessory comprises a light source, such as a magnet-generator driven light source, such as an electric battery powered light source, such as a front light and/or a rear light and/or a combined front and rear light.

10. The attaching device according to any of the preceding claims, wherein the vehicle accessory comprises an electronic vehicle instrument, such as a speedometer, a pulse meter, a navigation device, a telephone/smartphone, a power meter.

11. The attaching device according to any of the preceding claims, wherein the vehicle is a bicycle, such as the attaching device being configured for attachment on a part of a frame of the bicycle, such as a fork and/or a seat stay, and/or a seat post, and/or handle bars.

12. A bicycle accessory system comprising:
- an attaching device according to any of the preceding claims, and
- a vehicle accessory, such as a bicycle light,
wherein the attaching device is configured for attaching the vehicle accessory to a part of a bicycle, such as a part of a frame and/or handle bars.

13. A bicycle comprising a bicycle accessory system according to claim 12.

14. A method for attaching a vehicle accessory to a vehicle, such as a bicycle, the method comprising:
- providing an attaching device according to any of claims 1-11 with a vehicle accessory being housed in the housing (103) and/or attached to the housing (103),
- placing a base (101) of the attaching device against a part of the vehicle (601) to which the vehicle accessory is to be attached,
- winding the flexible thread (105) around the part of the vehicle (601),
- fastening the flexible thread (105) to the attaching device and/or to the vehicle (601),
- tightening the flexible thread (105) around the part of the vehicle (601) by rotating the driving part (203), such as by a tool (701) engaging with the driving part (203) through an opening in the housing (103), thereby securing the attaching device to the vehicle (601).

15. The method according to claim 14, wherein the method comprises attaching a bicycle light to a bicycle, such as a bicycle light being driven by a magnet generator, such as the bicycle light being arranged inside the housing (103).

## Patentansprüche

1. Befestigungsvorrichtung zum Befestigen eines Fahrzeugzubehörs an einem Fahrzeug, wie etwa einem Fahrrad, wobei die Befestigungsvorrichtung umfasst:
- eine Basis (101), die zum Kontaktieren mit einem Teil des Fahrzeugs (601) eingerichtet ist,
- ein Gehäuse (103), das eingerichtet ist, um das Fahrzeugzubehör unterzubringen und/oder zur Befestigung an dem Fahrzeugzubehör, wobei das Gehäuse (103) mindestens in einem zusammengebauten Zustand der Befestigungsvorrichtung mit der Basis (101) verbunden ist,
- eine selbsthemmende Getriebeanordnung, die innerhalb des Gehäuses (103) angeordnet ist, wobei die selbsthemmende Getriebeanordnung ein antreibendes Teil (203) und ein angetriebenes Teil (205) umfasst, wobei das antreibende Teil (203) eingerichtet ist, um von außerhalb des Gehäuses (103) für einen Benutzer zugänglich zu sein, und um von dem Benutzer gedreht zu werden, wobei das antreibende Teil (203) weiter eingerichtet ist, um infolge der Drehung mit dem angetriebenen Teil (205) einzugreifen, um zu bewirken, dass das angetriebene Teil (205) sich in eine beabsichtigte Winkelrichtung dreht, wobei das angetriebene Teil (205) durch seine eigene Kraft in einer Winkelrichtung entgegengesetzt zu der beabsichtigten Winkelrichtung darin gehemmt ist, sich zu drehen,
- eine Welle (207), die derart an dem angetriebenen Teil (205) fixiert ist, dass es der Welle (207) möglich ist, sich infolge der Drehung des antreibenden Teils (203) mit dem angetriebenen Teil (205) zu drehen,
- ein flexibles Gewinde (105), das zur Befestigung an der Welle (207) eingerichtet ist, wobei das flexible Gewinde (105) weiter eingerichtet ist, um aus dem Gehäuse (103) durch eine Öffnung auszutreten, um um ein Teil des Fahrzeugs (601) herum gewickelt zu werden, und um an der Befestigungsvorrichtung und/oder an dem Fahrzeug (601) angebracht zu werden, wobei das flexible Gewinde (105) angeordnet ist, um infolge der Drehung des antreibenden Teils (203) derart um die Welle (207) aufgespult zu werden, dass das flexible Gewinde (105) um das Teil des Fahrzeugs (601) herum festgezogen wird, wodurch die Befestigungsvorrichtung an dem Fahrzeug (601) gesichert wird.

2. Befestigungsvorrichtung nach Anspruch 1, wobei ein an dem Fahrzeug (601) zu befestigendes Fahrzeugzubehör innerhalb des Gehäuses (103) angeordnet und mindestens teilweise von dem Gehäuse (103) umschlossen ist.

3. Befestigungsvorrichtung nach Anspruch 1 oder 2, wobei die selbsthemmende Getriebeanordnung ein Schneckentrieb ist.

4. Befestigungsvorrichtung nach einem der vorstehenden Ansprüche, wobei das Gehäuse (103) durch ein Kugelgelenk mit der Basis (101) verbunden ist, wobei das Kugelgelenk einen sphärischen Vorsprung an einem von der Basis (101) und dem Gehäuses (103) umfasst, der eingerichtet ist, um derart in einen Sockel des anderen von der Basis (101) und dem Gehäuses (103) zu passen, dass das Gehäuse (103) in mindestens einer Ebene einschließlich der Drehung in dieser Ebene frei bewegbar ist, bis das flexible Gewinde (105) hinreichend festgezogen ist und das Gehäuse (103) in seiner Position gegen die Basis (101) verriegelt ist.

5. Befestigungsvorrichtung nach einem der vorstehenden Ansprüche, wobei die Basis (101) eine Öffnung für das flexible Gewinde (105) umfasst, wobei das flexible Gewinde (105) eingerichtet ist, um derart durch die Öffnung zu verlaufen, dass das flexible Gewinde (105) mit mindestens einem Ende an der Welle (207) befestigbar ist, wobei das andere Ende des flexiblen Gewindes (105) eingerichtet ist, um aus dem Gehäuse (103) auszutreten, durch die Öffnung in der Basis (101) zu verlaufen, um ein Teil des Fahrzeugs (601) herum gewickelt zu werden und an der Befestigungsvorrichtung und/oder an dem Fahrzeug (601) angebracht zu werden.

6. Befestigungsvorrichtung nach einem der vorstehenden Ansprüche, wobei das flexible Gewinde (105) als eine Schlaufe angeordnet ist, wobei die Schlaufe eingerichtet ist, um durch eine Öffnung aus dem Gehäuse (103) auszutreten, um ein Teil des Fahrzeugs (601) herum gewickelt zu werden, und an der Befestigungsvorrichtung befestigt zu werden, etwa an der Basis (101) und/oder an dem Gehäuse (103) und/oder an der Welle (207).

7. Befestigungsvorrichtung nach einem der vorstehenden Ansprüche, wobei die Befestigungsvorrichtung ein Anbringungselement (201), wie etwa einen Haken und/oder einen Schnappverschlusshaken, zum Aufnehmen und Fixieren eines freien Endes des flexiblen Gewindes (105) umfasst, wobei das flexible Gewinde (105) durch ein anderes Ende an der Welle (207) befestigt ist und derart um ein Teil des Fahrzeugs (601) herum gewickelt ist, dass es einem Benutzer möglich ist, das freie Ende loszulassen, sodass der Benutzer das antreibende Teil (203) der selbsthemmenden Getriebeanordnung drehen und die Befestigungsvorrichtung an dem Fahrzeug (601) sichern kann.

8. Befestigungsvorrichtung nach einem der vorstehenden Ansprüche, wobei das antreibende Teil (203) ein erstes Ende, das eingerichtet ist, um infolge der Drehung mit dem angetriebenen Teil (205) einzugreifen, und ein zweites Ende, das eingerichtet ist, um mit einem zum Bewirken der Drehung des antreibenden Teils (203) verwendeten Werkzeug (701) einzugreifen, umfasst.

9. Befestigungsvorrichtung nach einem der vorstehenden Ansprüche, wobei das Fahrzeugzubehör eine Lichtquelle, wie etwa eine magnetgeneratorgetriebene Lichtquelle, wie etwa eine elektrische batteriebetriebene Lichtquelle, wie etwa ein Vorderlicht und/oder ein Rücklicht und/oder ein kombiniertes Vorder- und Rücklicht umfasst.

10. Befestigungsvorrichtung nach einem der vorstehenden Ansprüche, wobei das Fahrzeugzubehör ein elektronisches Fahrzeuginstrument umfasst, wie etwa ein Tachometer, einen Pulsmesser, ein Navigationsgerät, ein Telefon/Smartphone, einen Leistungsmesser.

11. Befestigungsvorrichtung nach einem der vorstehenden Ansprüche, wobei das Fahrzeug ein Fahrrad ist, sodass die Befestigungsvorrichtung etwa zur Befestigung an einem Teil eines Rahmens des Fahrrads eingerichtet ist, wie etwa einer Gabel und/oder einer Sitzstrebe, und/oder einer Sattelstütze und/oder Lenkerstangen.

12. Fahrradzubehörsystem, umfassend:
- eine Befestigungsvorrichtung nach einem der vorstehenden Ansprüche, und
- ein Fahrzeugzubehör, wie etwa ein Fahrradleicht,
wobei die Befestigungsvorrichtung zur Befestigung des Fahrzeugzubehörs an einem Teil eines Fahrrads, wie etwa einem Teil eines Rahmens und/oder Lenkerstangen, eingerichtet ist.

13. Fahrrad umfassend ein Fahrradzubehörsystem nach Anspruch 12.

14. Verfahren zum Befestigen eines Fahrzeugzubehörs an einem Fahrzeug, wie etwa einem Fahrrad, wobei das Verfahren umfasst:
- Bereitstellen einer Befestigungsvorrichtung nach einem der Ansprüche 1-11, wobei ein Fahrzeugzubehör in dem Gehäuse (103) untergebracht und/oder an dem Gehäuse (103) befestigt ist,
- Platzieren einer Basis (101) der Befestigungsvorrichtung gegen ein Teil des Fahrzeugs (601), an dem das Fahrzeugzubehör anzubringen ist,
- Wickeln des flexiblen Gewindes (105) um das Teil des Fahrzeugs (601) herum,
- Anbringen des flexiblen Gewindes (105) an der Befestigungsvorrichtung und/oder an dem Fahrzeug (601),
- Festziehen des flexiblen Gewindes (105) um das Teil des Fahrzeugs (601) herum durch Drehen des antreibenden Teils (203), wie etwa mit einem Werkzeug (701), das durch eine Öffnung in dem Gehäuse (103) mit dem antreibenden Teil (203) eingreift, wodurch die Befestigungsvorrichtung an dem Fahrzeug (601) gesichert wird.

15. Verfahren nach Anspruch 14, wobei das Verfahren das Befestigen eines Fahrradlichts an einem Fahrrad umfasst, wie etwa eines Fahrradlichts, das von einem Magnetgenerator angetrieben wird, wie etwa das Fahrradlicht, das innerhalb des Gehäuses (103) angeordnet ist.

## Revendications

1. Dispositif de fixation permettant de fixer un accessoire de véhicule sur un véhicule, tel qu'une bicyclette, le dispositif de fixation comprenant :
- une base (101) configurée pour entrer en contact avec une partie du véhicule (601),
- un boîtier (103) qui est configuré pour loger l'accessoire de véhicule et/ou pour la fixation à l'accessoire de véhicule, le boîtier (103) étant relié à la base (101) au moins en un état assemblé du dispositif de fixation,
- un système d'engrenage autobloquant disposé à l'intérieur du boîtier (103), le système d'engrenage autobloquant comprenant une partie d'entraînement (203) et une partie entraînée (205), la partie d'entraînement (203) étant configurée pour être accédée de l'extérieur du boîtier (103) par un utilisateur et pour être mise en rotation par ledit utilisateur, la partie d'entraînement (203) étant en outre configurée pour, lors de la rotation, s'engrener avec la partie entraînée (205), en faisant tourner la partie entraînée (205) dans une direction angulaire voulue, la partie entraînée (205) étant empêchée de tourner par sa propre force dans une direction angulaire opposée à la direction angulaire voulue,
- un arbre (207) qui est fixé à la partie entraînée (205), de manière à permettre audit arbre (207) de tourner avec la partie entraînée (205) lors de la rotation de la partie d'entraînement (203),
- un fil souple (105) qui est configuré pour l'attachement à l'arbre (207), le fil souple (105) étant en outre configuré pour sortir du boîtier (103) à travers une ouverture, pour être enroulé autour d'une partie du véhicule (601), et pour être attaché au dispositif de fixation et/ou au véhicule (601), ledit fil souple (105) étant conçu pour être enroulé autour de l'arbre (207) lors de la rotation de la partie d'entraînement (203), de manière à serrer ledit fil souple (105) autour de la partie du véhicule (601, ce qui assure la fixation du dispositif de fixation sur le véhicule (601).

2. Dispositif de fixation selon la revendication 1, dans lequel un accessoire de véhicule destiné à être fixé sur un véhicule (601) est disposé à l'intérieur du boîtier (103) et au moins en partie entouré par le boîtier (103).

3. Dispositif de fixation selon la revendication 1 ou 2, dans lequel le système d'engrenage autobloquant est une vis sans fin.

4. Dispositif de fixation selon l'une quelconque des revendications précédentes, dans lequel le boîtier (103) est relié à la base (101) par une articulation à rotule, ladite articulation à rotule comprenant une partie saillante sphérique sur un élément parmi la base (101) et le boîtier (103), configurée pour s'emboîter dans une cavité de l'autre élément parmi la base (101) et le boîtier (103), de manière à permettre au boîtier (103) d'être déplacé librement dans au moins un plan y compris en rotation dans ledit plan, jusqu'à ce que le fil souple (105) soit suffisamment serré, et que le boîtier (103) soit bloqué en position contre la base (101).

5. Dispositif de fixation selon l'une quelconque des revendications précédentes, dans lequel la base (101) comprend une ouverture pour le fil souple (105), le fil souple (105) étant configuré pour passer à travers ladite ouverture, de manière à permettre au fil souple (105) d'être attaché à l'arbre (207) par au moins une extrémité, l'autre extrémité du fil souple (105) étant configurée pour sortir du boîtier (103), passer à travers ladite ouverture dans la base (101), être enroulée autour d'une partie du véhicule (601), et être attachée au dispositif de fixation et/ou au véhicule (601).

6. Dispositif de fixation selon l'une quelconque des revendications précédentes, dans lequel le fil souple (105) est disposé sous forme d'une boucle, la boucle, la boucle étant configurée pour sortir du boîtier (103) à travers une ouverture, être enroulée autour d'une partie du véhicule (601), et être attachée au dispositif de fixation, par exemple à la base (101) et/ou au boîtier (103) et/ou à l'arbre (207).

7. Dispositif de fixation selon l'une quelconque des revendications précédentes, dans lequel le dispositif de fixation comprend une attache (201), telle qu'un crochet et/ou un crochet de blocage à déclic, destinée à recevoir et fixer une extrémité libre du fil souple (105), ledit fil souple (105) étant attaché par une autre extrémité à l'arbre (207) et étant enroulé autour d'une partie du véhicule (601), de manière à permettre à un utilisateur de lâcher ladite extrémité libre, de sorte que l'utilisateur peut faire tourner la partie d'entraînement (203) du système d'engrenage autobloquant et assurer la fixation du dispositif de fixation sur le véhicule (601).

8. Dispositif de fixation selon l'une quelconque des revendications précédentes, dans lequel la partie d'entraînement (203) comprend une première extrémité configurée pour s'engrener avec la partie entraînée (205) lors d'une rotation, et une seconde extrémité configurée pour s'engager avec un outil (701) utilisé pour provoquer une rotation de la partie d'entraînement (203).

9. Dispositif de fixation selon l'une quelconque des revendications précédentes, dans lequel l'accessoire de véhicule comprend une source de lumière, telle qu'une source de lumière actionnée par générateur à aimant, telle qu'une source de lumière alimentée par pile électrique, telle qu'un éclairage avant et/ou un éclairage arrière et/ou un éclairage avant et arrière combiné.

10. Dispositif de fixation selon l'une quelconque des revendications précédentes, dans lequel l'accessoire de véhicule comprend un instrument électronique de véhicule, tel qu'un indicateur de vitesse, un compteur d'impulsions, un dispositif de navigation, un téléphone/smartphone, un compteur d'énergie.

11. Dispositif de fixation selon l'une quelconque des revendications précédentes, dans lequel le véhicule est une bicyclette, par exemple le dispositif de fixation étant configuré pour fixation sur une partie d'un cadre de la bicyclette, telles qu'une fourche et/ou un hauban, et/ou une tige de selle, et/ou le guidon.

12. Système d'accessoire pour bicyclette comprenant :
- un dispositif de fixation selon l'une quelconque des revendications précédentes, et
- un accessoire de véhicule, tel qu'un éclairage de bicyclette,
dans lequel le dispositif de fixation est configuré pour fixer l'accessoire de véhicule sur une partie d'une bicyclette, telle d'une partie d'un cadre et/ou du guidon.

13. Bicyclette comprenant un système d'accessoire de bicyclette selon la revendication 12.

14. Procédé pour fixer un accessoire de véhicule sur un véhicule, tel qu'une bicyclette, le procédé comprenant les étapes consistant à :
- fournir un dispositif de fixation selon l'une quelconque des revendications 1 à 11 avec un accessoire de véhicule qui est logé dans le boîtier (103) et/ou fixé sur le boîtier (103),
- placer une base (101) du dispositif de fixation contre une partie du véhicule (601) sur laquelle doit être fixé l'accessoire de véhicule,
- enrouler le fil souple (105) autour de la partie du véhicule (601),
- attacher le fil souple (105) au dispositif de fixation et/ou au véhicule (601),
- serrer le fil souple (105) autour de la partie du véhicule (601) en faisant tourner la partie d'entraînement (203), comme au moyen d'un outil (701) s'engageant avec la partie d'entraînement (203) à travers une ouverture dans le boîtier (103), ce qui assure la fixation du dispositif de fixation sur le véhicule (601).

15. Procédé selon la revendication 14, dans lequel le procédé comprend la fixation d'un éclairage de bicyclette sur une bicyclette, tel qu'un éclairage de bicyclette qui est actionné par un générateur à aimant, tel que l'éclairage de bicyclette qui est disposé à l'intérieur du boîtier (103).
